# EUROPEAN PATENT SPECIFICATION

(11) **EP 4 083 497 B1**
(45) Date of publication and mention of the grant of the patent: **23.08.2023**
(21) Application number: 21183714.1
(22) Date of filing: 05.07.2021
(51) Int. Cl.: F21S 10/00, F21V 13/02, F21V 3/04, F21V 33/00, F21W 121/00, F21Y 115/10, F21Y 115/30, F21Y 113/20

(54) **INTELLIGENT AURORA BOREALIS PROJECTION LAMP**
INTELLIGENTE AURORA-BOREALIS-PROJEKTIONSLAMPE
LAMPE DE PROJECTION INTELLIGENTE D'AURORES BORÉALES

(30) Priority: 30.04.2021 CN 202110485815
(43) Date of publication of application: 02.11.2022
(73) Proprietor: Shenzhen Skoe Technology Co., Ltd., Shenzhen City 518109 (CN)
(72) Inventor: Zheng, Caijian, Shenzhen (CN); Ouyang, Wenzhen, Shenzhen, 518109 (CN)
(74) Representative: Cleanthous, Marinos

(56) References cited:
- CN-A- 111 734 978
- CN-U- 207 716 320
- US-A1- 2016 313 636
- US-A1- 2017 219 176

## Description

### TECHNICAL FIELD

The present disclosure relates to a projection device, and in particular, an intelligent aurora borealis projection lamp.

### BACKGROUND

Ambient lights are used in indoor places such as bedrooms, etc. Lamps are used to directly project light to create a starry sky and other environmental projection shapes, thereby creating corresponding atmospheres. An existing ambient projection lamp is basically a cloud-like or water ripple starry lamp correspondingly having a monotonous lighting effect, which easily causes visual fatigue.

A projection device of the prior art is disclosed in CN 111734978 A.

### SUMMARY

The technical problem to be solved in the present disclosure is to provide an intelligent aurora borealis projection lamp for the aforementioned defects in the prior art, so as to solve the defect of a monotonous projection light effect in the existing technical scope.

The technical solution used by the present disclosure to solve the technical problem is as follows: An intelligent aurora borealis projection lamp is provided, including a shell, a control panel arranged in the shell, an aurora borealis component, and a film component. The aurora borealis component includes a first LED light source component, a third optical lens arranged above the LED light source component and a water ripple sheet arranged above the third optical lens; the film component includes a second LED light source component, a projection seat, a first optical lens arranged in the projection seat, and a dial component arranged above the first optical lens and used for fixing a film sheet; the dial component is provided with projection holes corresponding to film sheet patterns; the bottom of the dial component is at least partially supported to the projection seat, and a side end of the dial component at least partially penetrates through the shell; the dial component is moved to switch the film sheet pattern above the projection seat; the shell is provided with a lens cover corresponding to the upper part of the aurora borealis component; the shell is provided with a second light outlet hole corresponding to a position above the film component; a second optical lens is arranged in the second light outlet hole; and the aurora borealis component and the film component are electrically connected to the control panel.

According to the invention, the dial component includes a dial and a pressing sheet; the film sheet is arranged between the dial and the pressing sheet; the bottom of the dial is provided with a groove; the pressing sheet is arranged in the groove; and the dial and the pressing sheet are fixed through fixing pillars.

According to the invention, the projection seat extends and is provided with a supporting part used for supporting the dial component.

In one of the embodiments, the shell includes an upper shell and a hemispheric lower shell; a laser component electrically connected to the control panel is also arranged in the shell, and includes a laser device and a grating sheet arranged at the upper part of the laser device; the upper shell is provided with a first light outlet hole at a position corresponding to an outlet of the laser device; the intelligent aurora borealis projection lamp further includes a bracket arranged below the shell; and the shell is rotatably connected to the bracket through a rotating shaft.

In one of the embodiments, the first LED light source component includes a first LED lamp panel, and at least one first LED light source that is uniformly distributed around the center of the first LED lamp panel serving as a circle center; the third optical lens corresponds to the first LED light source; the aurora borealis component further includes a lens bracket used for fixing the third optical lens; the intelligent aurora borealis projection lamp further includes a driving component; an output shaft of the driving component penetrates through the center of the first LED lamp panel; and the water ripple sheet is connected to the output shaft.

In one of the embodiments, the lens cover has a semicircular outline; the outer spherical surface of the lens cover is a grain-free smooth surface; and a plurality of irregular arc-shaped prisms are distributed on the inner spherical surface of the lens cover.

In one of the embodiments, the rotating shaft is arranged in a chamber of the lower shell; the bracket includes a semi-ring base and two connecting support arms; the lower shell is correspondingly provided with two strip-type grooves that are sunken inwards; the strip-type grooves are provided with first through holes for allowing the connecting support arms to be disposed in a penetrating manner; and the connecting support arms are arranged in the first through holes in a penetrating manner and are connected to the rotating shaft.

In one of the embodiments, the intelligent aurora borealis projection lamp further includes an audio component used for generating white noise; the audio component is electrically connected to the control panel; and a sound collection hole is formed in the shell.

In one of the embodiments, the audio component includes a horn arranged below the driving component and an audio control module arranged on the control panel; the horn is electrically connected to the control panel; and the lower shell is provided with sound outlet holes at a position corresponding to the lower part of the horn.

In one of the embodiments, the intelligent aurora borealis projection lamp further includes a Bluetooth module and a Wi-Fi module which are electrically connected to the control panel.

The present disclosure has the beneficial effects that by means of the arrangement of the aurora borealis component and the switchable film component, the light sources of aurora borealis are focused by the third optical lens and then projected through the water ripple sheet and the lens cover to present an aurora effect; the swichable film component improves the selectivity of patterns; and different patterns can be selectively projected through the dial component, without removing and replacing the film sheet at each time, so that the swichable film component is user-friendly.

### BRIEF DESCRIPTION OF THE DRAWINGS

The present disclosure is further described below in combination with the accompanying drawings and embodiments. In the drawing:
FIG. 1 is an exploded structural diagram of an intelligent aurora borealis projection lamp of the present disclosure;
FIG. 2 is an overall schematic structural diagram of an intelligent aurora borealis projection lamp of the present disclosure;
FIG. 3 is a schematic structural diagram of the inner side of a lens cover of the present disclosure;
FIG. 4 is a schematic structural diagram of an aurora borealis component of the present disclosure; and
FIG. 5 is a schematic structural diagram of a film component of the present disclosure.

1: shell; 11: upper shell; 12: lower shell; 13: power supply main board; 14: control panel; 15: decorative ring; 16: lens cover; 2: film component; 21: second LED light source component; 22: projection seat; 221: supporting part; 23: first optical lens; 24: dial component; 241: projection hole; 242: dial; 243: pressing disk; 244: locating shaft; 245: fixing pillar; 25: second light outlet hole; 26: second optical lens; 27: film sheet; 3: aurora borealis component; 31: first LED light source component; 32: water ripple sheet; 33: third optical lens; 34: lens bracket; 41: grating sheet; 42: laser device; 43: first light outlet hole; 44: heat dissipater; 51: motor; 52: motor cover; 6: bracket; 71: strip-type groove; 72: rotating shaft; 8: limiting component; 91: horn; 92: sound outlet hole; 93: button component; 94: USB interface.

### DESCRIPTION OF THE EMBODIMENTS

Now with reference to the drawings, the preferred embodiments of the present disclosure are described in detail.

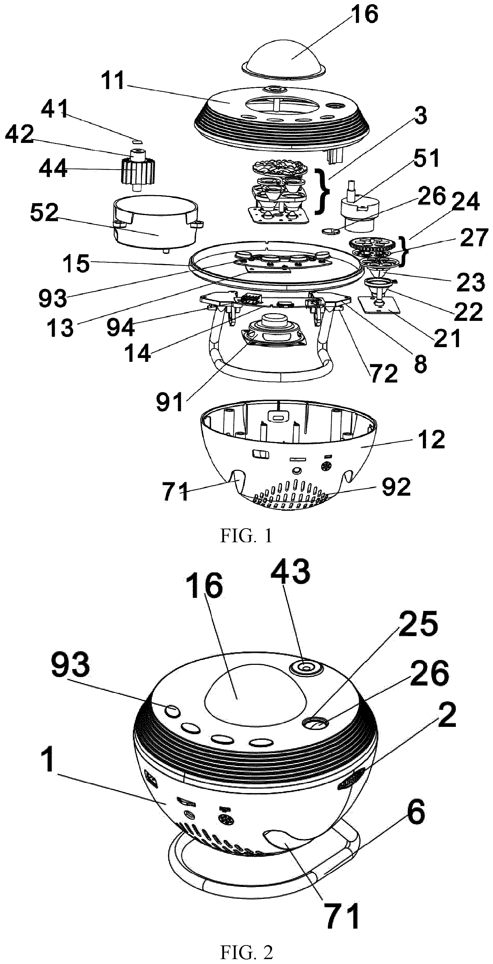

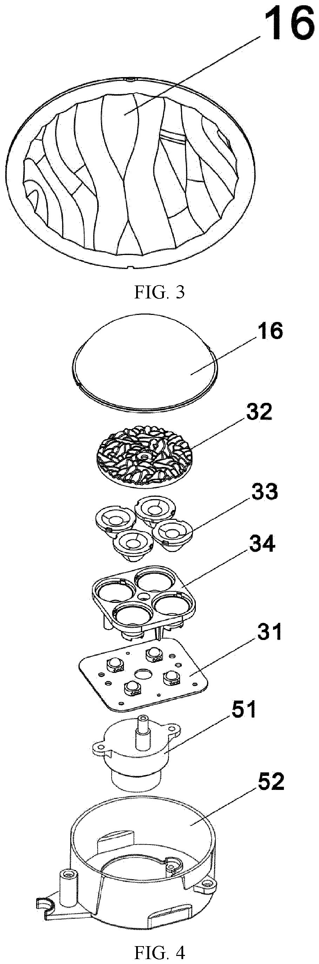

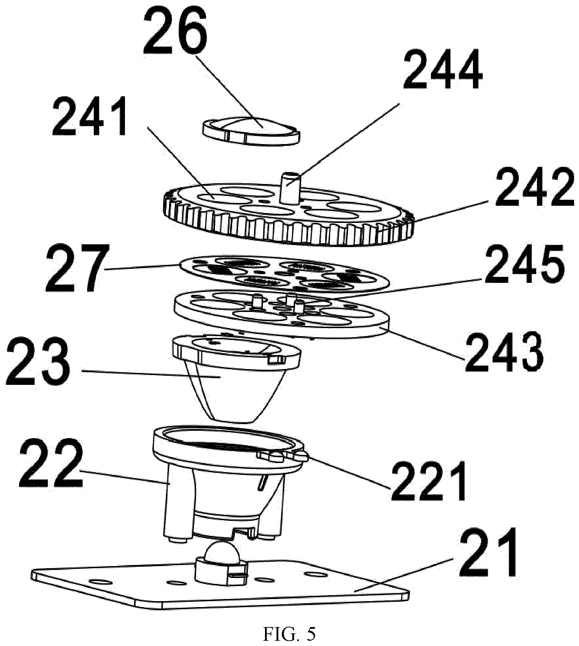

As shown in FIG. 1 to FIG. 5, an intelligent aurora borealis projection lamp is provided, including a shell 1, a control panel 14 arranged in the shell 1, an aurora borealis component 3, and a film component 2. The aurora borealis component 3 and the film component 2 are electrically connected to the controller 14. The aurora borealis component 3 is used for presenting an aurora borealis effect and includes a first LED light source component 31, a third optical lens 33 arranged above the LED light source component, and a water ripple sheet 32 arranged above the third optical lens 33; the shell 1 is provided with a lens cover 16 corresponding to the upper part of the aurora borealis component 3; a light source of the first LED light source component 31 is focused by the third optical lens 33 and then projected through the water ripple sheet 32 and the lens cover 16 to present an aurora effect.

The film component 2 includes a second LED light source component 21, a projection seat 22, a first optical lens 23 arranged in the projection seat 22, and a dial component 24 arranged above the first optical lens 23 and used for fixing a film sheet 27; the dial component 24 is provided with projection holes 241 corresponding to film sheet patterns; the bottom of the dial component 24 is at least partially supported to the projection seat 22, and a side end of the dial component 24 at least partially penetrates through the shell 1; the shell 1 is provided with a second light outlet hole 25 corresponding to a position above the film component 2; and a second optical lens 26 is arranged in the second light outlet hole 25. The dial component 24 is moved to switch the film sheet patterns above the projection seat 22 to present different film sheet patterns, such as a moon, a celestial body, a constellation, and stars; the number of patterns of the projection lamp is increased; and the use feeling of a user is enhanced.

Specifically, the shell 1 includes an upper shell and a lower shell; the first LED light source component 31 includes a first LED lamp panel and at least one first LED light source uniformly distributed around the center of the first LED lamp panel serving as a circle center; the third optical lens 33 corresponds to the first LED light source; the aurora borealis component 3 further includes a lens bracket 34 used for fixing the third optical lens 33; light of the first LED light source is focused by the third optical lens 33 to the water ripple sheet 32 and then is projected by the lens cover 16. In the present embodiment, there are four first LED light sources, so that four third optical lenses 33 are correspondingly provided and fixed above the first LED lamp panel through the lens bracket 34. In other embodiments, there can be one or more first LED light sources.

The intelligent aurora borealis projection lamp further includes a driving component that includes a motor 51 and an output shaft; the output shaft penetrates through the first LED lamp panel and the center of the lens bracket 34 and presses against the water ripple sheet 32; the water ripple sheet 32 is driven by the driving component to move; the water ripple sheet 32 moves under the driving of the motor 51, so that imaged aurora borealis moves in an opposite direction, which is more irregular than a traditional water ripple effect to bring a better visual effect to the user. Much further, the driving component further includes a motor cover 52 arranged in the shell 1; the driving component and the aurora borealis component 3 are arranged in the motor cover 52; and the lens cover 16 is pressed on the motor cover 52, so that the aurora borealis component 3 is facilitated to be aligned with the lens cover 16, and the whole internal structure is neater.

The lens cover 16 has a semicircular outline; the outer spherical surface of the lens cover 16 is a grain-free smooth surface; and a plurality of irregular arc-shaped prisms are distributed on the inner spherical surface of the lens cover 16. After the water ripple pattern of the aurora borealis component 3 is reflected and refracted by the lens cover 16, the projection effect greatly simulates an aurora borealis effect, and a projection area is larger.

The intelligent aurora borealis projection lamp further includes a laser component that is arranged in the shell 1 and is electrically connected to the control panel 14; the laser component includes a laser device 42 and a grating sheet 41 arranged at the upper part of the laser device 42; a heat dissipater 44 is arranged on the laser device; and the upper shell is provided with a first light outlet hole 43 at a position corresponding to an outlet of the laser device 42.

For the film component 2, the dial component 24 includes a dial 242 and a pressing sheet 243; the film sheet 27 is arranged between the dial 242 and the pressing sheet 243; and the dial component 24 is provided with the projection holes 241 at positions corresponding to the film sheet patterns. Specifically, the bottom of the dial 242 is provided with a groove; the pressing sheet 243 is arranged in the groove; the center of the dial 242 is provided with a locating shaft 244; and the dial component 24 is moved to rotate around the locating shaft 244 serving as a center. The dial 242 and the pressing sheet 243 are connected through fixing pillars 245 to realize synchronous rotation. Specifically, corresponding fixing holes can be uniformly distributed on the dial 242 and the pressing sheet 243, and the fixing pillars 245 corresponding to the fixing holes are arranged at the corresponding positions. For example, three fixing pillars 245 can be uniformly arranged at the center position of the pressing sheet 243, and three fixing pillars 245 can be arranged on the outer side of the lower end of the dial 242, so as to ensure connection between the pressing sheet 243 and the dial 242.

Much further, the second LED light source component 21 includes a second LED lamp panel and a second LED light source arranged on the second LED lamp panel; the first optical lens 23 is arranged in the projection seat 22; the bottom of the projection seat 22 is provided with a through hole; and the second LED light source penetrates through the through hole and is focused by the first optical lens 23. The upper part of the projection seat 22 extends and is provided with a supporting part 221 used for supporting the dial component 24; and the arrangement of the supporting part 221 ensures that the gravity center of the dial component 24 is on the projection seat 22 to prevent instability of the dial component 24 when the dial 242 is moved.

In the present embodiment, there are six film sheet patterns that are uniformly disposed, and there are also six corresponding projection holes 241 of the dial component 24 that are uniformly distributed. In other embodiments, two projection holes 241 or projection holes in other numbers of the dial component 24 corresponding to the film sheet patterns can be provided.

The second light outlet hole 25 is used for light exiting of the film component 2; the second optical lens 26 is arranged in the second light outlet hole 25; and the second optical lens 26 is used for focusing of the film sheet 27 to ensure that the film sheet patterns are displayed clearly and integrally. The second LED light source is located on the same straight line as the film sheet patterns, the projection holes 241 and the second optical lens 26.

In the present embodiment, in order to further broaden the use scenario of the intelligent aurora borealis projection lamp, the intelligent aurora borealis projection lamp further includes a bracket 6 arranged below the shell 1; and the shell 1 is rotatably connected to the bracket 6 through a rotating shaft 72. The projection effect is enhanced by the bracket 6 with adjustable angle to bring a visual feast to the user and make it easier for the user to get relax.

The shell 1 can be made of a plastic material; a decorative ring 15 can be arranged between the upper shell 11 and the lower shell 12 to improve the ornamental value of the appearance of the shell 1; and the lower shell 12 is hemispheric. In the present embodiment, the rotating shaft 72 is arranged in a chamber of the lower shell 12; the bracket 6 includes a semi-ring base and two connecting support arms; the lower shell 12 is correspondingly provided with two strip-type grooves 71 that are sunken inwards; the strip-type grooves 71 are provided with first through holes for allowing the corresponding connecting support arms of the bracket 6 to be disposed in a penetrating manner; and the connecting support arms are arranged in the through holes in a penetrating manner and are connected to the rotating shaft 72 in the chamber of the lower shell 12. The lower shell 12 is set to be hemispheric, so that the rotatable connection between the rotating shaft 72 and the connecting support arms are used to enable the shell 1 to rotate along an opening direction of the strip-type grooves 71.

Much further, in order to enable the shell 1 of the intelligent aurora borealis projection lamp to be fixed in a certain direction, a limiting component 8 that cooperates with the rotating shaft 72 is also arranged in the lower shell 12 to fix the intelligent aurora borealis projection lamp.

The intelligent aurora borealis projection lamp further includes an audio component used for generating white noise; the audio component is electrically connected to the control panel 14; and a sound collection hole is formed in the shell 1. Further, the intelligent aurora borealis projection lamp further includes a Bluetooth module and a Wi-Fi module; and the Bluetooth module and the Wi-Fi module are arranged on the control panel 14. The Bluetooth module and the Wi-Fi module can realize wireless communication between the control panel 14 and a terminal such as a mobile phone or an intelligent sound box; a function of playing music is realized by mobile phone control; an on or off state of light and switching of light effects can be controlled through a mobile phone application (APP) or the intelligent sound box; the working state of the intelligent aurora borealis projection lamp can be remotely controlled at a fixed time point; and a function of remotely and wirelessly adjusting the brightness of light is realized.

The audio component can play burn white noise, and can also be connected to intelligent equipment through the Bluetooth module or the Wi-Fi module to play an audio file or music. In the present embodiment, the audio component includes a horn 91 arranged below the driving component and an audio control module arranged on the control panel 14; the horn 91 is arranged below the driving component; the audio control module is arranged on the control panel 14; the horn 91 is electrically connected to the control panel 14; the lower shell 12 is provided with sound outlet holes 92 at a position corresponding to the lower part of the horn 91; and the music playing function can be realized by controlling the audio control module.

A power supply main board 13 used for supplying power to the intelligent aurora borealis projection lamp is also arranged in the shell 1; and the power supply main board 13 is electrically connected to the control panel 14. The shell 1 is also provided with a USB interface 94 that is connected to the control panel 14 and used for supplying power to the intelligent aurora borealis projection lamp. The intelligent aurora borealis projection lamp further includes button components 93 arranged on the shell 1; and the button components 93 include buttons and a button main board; and the button main board is electrically connected to the control panel 14. The button components 93 can include buttons 931 used for volume adjustment, light on/off, music mode switching, light brightness and other functions. The intelligent aurora borealis projection lamp can be directly controlled through the button components 93.

The intelligent aurora borealis projection lamp of the present disclosure is selectable to more scenarios through the switchable film component to enhance the experience of the user.

It should be noted that the terms "perpendicular", "horizontal", "coaxial", "left" and similar expressions used herein are for illustrative purposes only, and are not meant to be the only implementation modes.

All the technical features of the embodiments described above can be arbitrarily combined. In order to simplify the description, all possible combinations of the technical features in the above embodiments have not been described. However, the combinations of these technical features should be considered as the scope described in this description as long as there is no contradiction in them.

It should be understood that the above embodiments are only used to illustrate the technical solutions of the present disclosure, not to limit the technical solutions.

## Claims

1. An intelligent aurora borealis projection lamp, comprising a shell (1), a control panel (14) arranged in the shell (1), an aurora borealis component (3), and a film component (2), wherein the aurora borealis component (3) comprises a first LED light source component (31), a third optical lens (33) arranged above the LED light source component, and a water ripple sheet (32) arranged above the third optical lens (33);
the film component (2) comprises a second LED light source component (21), a projection seat (22), a first optical lens (23) arranged in the projection seat (22), 2. and a dial component (24) arranged above the first optical lens (23) and used for fixing a film sheet (27); the dial component (24) is provided with projection holes (241) corresponding to film sheet patterns; the bottom of the dial component (24) is at least partially supported to the projection seat (22), and a side end of the dial component (24) at least partially penetrates through the shell (1); the dial component (24) is moved to switch the film sheet patterns above the projection seat; the shell (1) is provided with a lens cover (16) corresponding to the upper part of the aurora borealis component (3);
the shell is provided with a second light outlet hole (25) corresponding to a position above the film component (2); a second optical lens (26) is arranged in the second light outlet hole (25); the aurora borealis component (3) and the film component (2) are electrically connected to the control panel (14);
the dial component (24) comprises a dial (242) and a pressing sheet (243); the film sheet (27) is arranged between the dial (242) and the pressing sheet (243);
the bottom of the dial is provided with a groove; the pressing sheet (243) is arranged in the groove; the dial and the pressing sheet are fixed through fixing pillars (245);
the projection seat (22) extends and is provided with a supporting part (221) used for supporting the dial component (24).

2. The intelligent aurora borealis projection lamp according to claim 1, wherein the shell comprises an upper shell (11) and a hemispheric lower shell (12); a laser component electrically connected to the control panel is also arranged in the shell, and comprises a laser device (42) and a grating sheet (41) arranged at the upper part of the laser device; the upper shell is provided with a first light outlet hole (43) at a position corresponding to an outlet of the laser device; the intelligent aurora borealis projection lamp further comprises a bracket (6) arranged below the shell; and the shell is rotatably connected to the bracket through a rotating shaft (72).

3. The intelligent aurora borealis projection lamp according to claim 2, wherein the first LED light source component (31) comprises a first LED lamp panel, and at least one first LED light source that is uniformly distributed around the center of the first LED lamp panel serving as a circle center; the third optical lens (33) corresponds to the first LED light source; the aurora borealis component further comprises a lens bracket (34) used for fixing the third optical lens (33); the intelligent aurora borealis projection lamp further comprises a driving component; an output shaft of the driving component penetrates through the center of the first LED lamp panel; and the water ripple sheet (32) is connected to the output shaft.

4. The intelligent aurora borealis projection lamp according to claim 3, wherein the lens cover (16) has a semicircular outline; the outer spherical surface of the lens cover is a grain-free smooth surface; and a plurality of irregular arc-shaped prisms are distributed on the inner spherical surface of the lens cover (16).

5. The intelligent aurora borealis projection lamp according to claim 2, wherein the rotating shaft (72) is arranged in a chamber of the lower shell (12) the bracket (6) comprises a semi-ring base and two connecting support arms; the lower shell is correspondingly provided with two strip-type grooves (71) that are sunken inwards; the strip-type grooves (71) are provided with first through holes for allowing the connecting support arms to be disposed in a penetrating manner; and the connecting support arms are arranged in the first through holes in a penetrating manner and are connected to the rotating shaft (72).

6. The intelligent aurora borealis projection lamp according to claim 2, wherein the intelligent aurora borealis projection lamp further comprises an audio component used for generating white noise; the audio component is electrically connected to the control panel (14); and a sound collection hole is formed in the shell (1).

7. The intelligent aurora borealis projection lamp according to claim 6, wherein the audio component comprises a horn (91) arranged below the driving component and an audio control module arranged on the control panel (14); the horn is electrically connected to the control panel; and the lower shell (12) is provided with sound outlet holes (92) at a position corresponding to the lower part of the horn (91).

8. The intelligent aurora borealis projection lamp according to claim 7, wherein the intelligent aurora borealis projection lamp further comprises a Bluetooth module and a Wi-Fi module which are electrically connected to the control panel (14).

## Patentansprüche

1. Eine intelligente Polarlichtprojektionslampe, die ein Gehäuse (1), ein im Gehäuse (1) angeordnetes Bedienfeld (14), eine Polarlichtkomponente (3), sowie eine Filmkomponente (2) umfasst, wobei die Polarlichtkomponente (3) eine erste LED-Lichtquellenkomponente (31), eine über der LED-Lichtquellenkomponente angeordnete dritte optische Linse (33), sowie eine über der dritten optischen Linse (33) angeordneten Wasserrippelfolie (32) umfasst, die Filmkomponente (2) umfasst eine zweite LED-Lichtquellenkomponente (21), eine Projektionsbasis (22), sowie eine erste optische Linse (23), die in der Projektionsbasis (22) angeordnet ist, sowie eine Ziffernblattkomponente (24), die oberhalb der ersten optischen Linse (23) angeordnet ist und zum Fixieren einer Filmfolie (27) verwendet wird; die Ziffernblattkomponente (24), die mit Projektionslöchern (241) versehen ist, die Filmblattmustern entsprechen; die Unterseite der Ziffernblattkomponente (24), die zumindest teilweise an der Projektionsbasis (22) abgestützt ist, sowie ein Seitenende des Wählscheibenkomponents (24), welches zumindest teilweise das Gehäuse (1) durchdringt; die Ziffernblattkomponente (24) wird bewegt, um die Filmblattmuster oberhalb der Projektionsbasis zu schalten; das Gehäuse (1) ist mit einer Linsenabdeckung (16) versehen, die dem oberen Teil der Aurora-Borealis-Komponente (3) entspricht; das Gehäuse ist mit einer zweiten Lichtaustrittsöffnung (25) versehen, die einer Position oberhalb der Filmkomponente (2) entspricht; eine zweite optische Linse (26) die in der zweiten Lichtaustrittsöffnung (25) angeordnet ist; die Aurora-Borealis-Komponente (3) sowie die Filmkomponente (2) sind elektrisch mit dem Bedienfeld (14) verbunden;
die Ziffernblattkomponente (24) umfasst ein Zifferblatt (242) sowie eine Pressfolie (243); das Filmblatt (27) ist zwischen dem Zifferblatt (242) und der Pressfolie (243) angeordnet;
der Boden des Zifferblatts ist mit einer Nut versehen; die Pressfolie (243) ist in der Nut angeordnet; das Zifferblatt und die Pressfolie sind anhand Befestigungspfeiler (245) befestigt;
der Projektionsbasis (22) erstreckt sich und ist mit einem Stützteil (221) versehen, das zum Abstützen der Ziffernblattkomponente (24) dient.

2. Die intelligente Polarlichtprojektionslampe gemäß Forderung 1, wobei das Gehäuse ein oberes Gehäuse (11), sowie ein halbkugelförmiges unteres Gehäuse (12) umfasst; eine mit dem Bedienfeld elektrisch verbundene Laserkomponente ist ebenfalls im Gehäuse angeordnet und umfasst eine Laservorrichtung (42) sowie ein am oberen Teil der Laservorrichtung angeordnetes Gitterblatt (41); die obere Schale ist mit einem ersten Lichtauslassloch (43) an einer Position versehen, die einem Auslass der Laservorrichtung entspricht; die intelligente Polarlichtprojektionslampe umfasst ferner eine Halterung (6), die unterhalb des Gehäuses angeordnet ist; und das Gehäuse ist mit der Halterung anhand einer Drehwelle (72) drehbar verbunden.

3. Die intelligente Polarlichtprojektionslampe gemäß Forderung 2, wobei die erste LED-Lichtquellenkomponente (31) ein erstes LED-Lampenfeld und mindestens eine erste LED-Lichtquelle umfasst, die gleichmäßig um das Zentrum des ersten LED- Lampenfelds herum verteilt ist, das als Kreiszentrum dient; die dritte optische Linse (33) entspricht der ersten LED-Lichtquelle; die Polarlichtkomponente umfasst ferner eine Linsenhalterung (34), die zum Befestigen der dritten optischen Linse (33) verwendet wird; die intelligente Polarlichtprojektionslampe umfasst ferner eine Antriebskomponente; eine Ausgangswelle der Antriebskomponente durchdringt die Mitte des ersten LED-Lampenfelds; und die Wasserrippelfolie (32) ist mit der Ausgangswelle verbunden.

4. Die intelligente Polarlichtprojektionslampe gemäß Forderung 3, wobei die Linsenabdeckung (16) einen halbkreisförmigen Umriss aufweist, die äußere kugelförmige Oberfläche der Linsenabdeckung eine kornfreie glatte Oberfläche aufweist und eine Vielzahl von unregelmäßigen bogenförmigen Prismen sind auf der inneren kugelförmigen Oberfläche der Linsenabdeckung (16) verteilt.

5. Die intelligente Polarlichtprojektionslampe gemäß Forderung 2, wobei die Drehwelle (72) in einer Kammer des unteren Gehäuses (12) angeordnet ist; die Halterung (6) eine Halbringbasis und zwei Verbindungstragearme umfasst; das untere Gehäuse entsprechend mit zwei streifenförmigen Rillen (71) versehen ist, die nach innen versenkt sind; die streifenförmigen Rillen (71) sind mit ersten Durchgangslöchern versehen, um eine durchdringende Anordnung der Verbindungsträgerarme zu ermöglichen; und die Verbindungsträgerarme sind in den ersten Durchgangslöchern durchdringend angeordnet und mit der Drehwelle (72) verbunden.

6. Die intelligente Polarlichtprojektionslampe gemäß Forderung 2, wobei die intelligente Polarlichtprojektionslampe ferner eine Audiokomponente umfasst, die zur Erzeugung von weißem Rauschen verwendet wird; die Audiokomponente ist elektrisch mit dem Bedienfeld (14) verbunden;
und sich ein Schallsammelloch im Gehäuse (1) bildet.

7. Die intelligente Polarlichtprojektionslampe gemäß Forderung 6, wobei die Audiokomponente ein Horn (91), das unterhalb der Antriebskomponente angeordnet ist, sowie ein Audiosteuerungsmodul umfasst, das auf dem Bedienfeld (14) angeordnet ist;
das Horn ist elektrisch mit dem Bedienfeld verbunden; und das untere Gehäuse (12) ist mit Schallaustrittslöchern (92) an einer Position versehen, die dem unteren Teil des Horns (91) entspricht.

8. Die intelligente Polarlichtprojektionslampe gemäß Forderung 7, wobei die intelligente Polarlichtprojektionslampe ferner ein Bluetooth-Modul sowie ein Wi-Fi-Modul umfasst, die elektrisch mit dem Bedienfeld (14) verbunden sind.

## Revendications

1. Une lampe intelligente à projection d'aurores boréales, comprenant une coque (1), un panneau de commande (14) disposé dans la coque (1), un composant aurora borealis (3) et un composant film (2), dans laquelle le composant aurora borealis (3) comprend un premier composant de source lumineuse LED (31), une troisième lentille optique (33) disposée au-dessus du composant de source lumineuse LED, et une feuille ondulée d'eau (32) disposée au-dessus de la troisième lentille optique (33) ;
le composant film (2) comprend un deuxième composant de source lumineuse LED (21), un siège de projection (22), une première lentille optique (23) disposée dans le siège de projection (22) et un composant à cadran (24) disposés au-dessus de la première lentille optique (23) et utilisés pour fixer une feuille de film (27) ; le composant du cadran (24) est muni de trous de projection (241) correspondant à des motifs de feuilles de film; le bas de l'élément du cadran (24) est au moins partiellement soutenu par le siège de projection (22) et une extrémité latérale du composant du cadran (24) pénètre au moins partiellement à travers la coque (1) ; le composant du cadran (24) est déplacé pour commuter les motifs de feuille de film au-dessus du siège de projection ; la coque (1) est munie d'un couvercle de lentille (16) correspondant à la partie supérieure du composant aurora borealis (3) ; la coque est munie d'un second trou de sortie de lumière (25) correspondant à une position au-dessus du composant du film (2) ; une deuxième lentille optique (26) est disposée dans le deuxième trou de sortie de lumière (25); le composant aurora borealis (3) et le composant film (2) sont reliés électriquement au panneau de commande (14) ;
le composant cadran (24) comprend un cadran (242) et une feuille de pressage (243) ; la feuille de film (27) est disposée entre le cadran (242) et la feuille de pressage (243) ;
le bas du cadran est muni d'une rainure ; la feuille de pressage (243) est disposée dans la rainure ; le cadran et la feuille de pressage sont fixés par des piliers de fixation (245) ;
Le siège de projection (22) se déploie et est muni d'une partie de support (221) utilisée pour soutenir le composant du cadran (24).

2. Lampe de projection intelligente aurora borealis selon la réclamation 1, dans laquelle la coque comprend une coque supérieure (11) et une coque inférieure hémisphérique (12) ; un composant laser relié électriquement au panneau de commande est également disposé dans la coque et comprend un dispositif laser (42) et une feuille de réseau (41) disposés dans la partie supérieure du dispositif laser ; la coque supérieure est munie d'un premier trou de sortie de lumière (43) à une position correspondant à une sortie du dispositif laser ; la lampe de projection intelligente aurora borealis comprend en outre un support (6) disposé sous le réservoir ; et la coque est reliée de manière rotative au support par un arbre rotatif (72).

3. Lampe à projection intelligente aurora borealis selon la réclamation 2, dans laquelle le premier composant de source lumineuse LED (31) comprend un premier panneau de lampe LED, et au moins une première source lumineuse LED qui est uniformément répartie autour du centre du premier panneau de lampe LED servant de centre circulaire ; la troisième lentille optique (33) correspond à la première source lumineuse LED ; le composant aurora borealis comprend en outre un support de lentille (34) utilisé pour fixer la troisième lentille optique (33) ; llampe de projection intelligente aurora borealis comprend en outre un composant moteur ; un arbre de sortie du composant moteur pénètre par le centre du premier panneau de lampe LED ; et la feuille ondulée d'eau (32) est connectée à l'arbre de sortie.

4. Lampe de projection intelligente aurora borealis selon la réclamation 3, dans laquelle le couvercle de l'objectif (16) présente un contour semi-circulaire ; la surface sphérique extérieure du couvercle de l'objectif est une surface lisse sans grain ; et une pluralité de prismes irréguliers en forme d'arc sont répartis sur la surface sphérique interne du couvercle de l'objectif (16).

5. Lampe de projection intelligente aurora borealis selon la réclamation 2, dans laquelle l'arbre rotatif (72) est disposé dans une chambre de la coque inférieure (12) ; le support (6) comprend une base semi-annulaire et deux bras de support de liaison ; la coque inférieure est pourvue en conséquence de deux rainures de type bande (71) qui sont enfoncées vers l'intérieur ; les rainures de type bande (71) sont munis d'un premier trou traversant pour permettre la disposition pénétrante des bras de support de connexion ; et les bras de support de liaison sont disposés dans les premiers trous traversants de manière pénétrante et sont reliés à l'arbre rotatif (72).

6. Lampe de projection intelligente aurora borealis selon la réclamation 2, dans laquelle la lampe de projection intelligente aurora borealis comprend en outre un composant audio utilisé pour générer du bruit blanc ; le composant audio est connecté électriquement au panneau de commande (14);
et un trou de collecte du son est formé dans la coquille (1).

7. Lampe de projection intelligente aurora borealis selon la réclamation 6, dans laquelle la composante audio comprend un klaxon (91) disposé en dessous du composant moteur et un module de commande audio disposé sur le panneau de commande (14) ;
le klaxon est connecté électriquement au panneau de commande ; et la coque inférieure (12) est munie de trous de sortie acoustique (92) à une position correspondant à la partie inférieure de la klaxon (91).

8. Lampe de projection intelligente aurora borealis selon la réclamation 7, dans laquelle la lampe de projection intelligente aurora borealis comprend en outre un module Bluetooth et un module Wi-Fi qui sont connectés électriquement au panneau de commande (14).
